# EUROPÄISCHE PATENTSCHRIFT

(11) **EP 0 784 755 B1**
(45) Veröffentlichungstag und Bekanntmachung des Hinweises auf die Patenterteilung: **05.12.2001**
(21) Anmeldenummer: 96917484.6
(22) Anmeldetag: 31.05.1996
(51) Int. Cl.: F16C 11/06

(54) **AXIALKUGELGELENK FÜR GESTÄNGE IN KRAFTFAHRZEUGEN**
AXIAL BALL JOINT FOR LINKAGES IN MOTOR VEHICLES
ARTICULATION A ROTULE AXIALE DE TIMONERIE POUR VEHICULES AUTOMOBILES

(30) Priorität: 10.06.1995 DE 29509566 U
(43) Veröffentlichungstag der Anmeldung: 23.07.1997
(73) Patentinhaber: ZF Lemförder Metallwaren AG, 49448 Lemförde (DE)
(72) Erfinder: SCHMUDDE, Norbert, D-49080 Osnabrück (DE); WELLERDING, Martin, D-49401 Damme (DE)
(86) Internationale Anmeldenummer: EP9602364
(87) Internationale Veröffentlichungsnummer: WO9641961

(56) Entgegenhaltungen:
- DE-A- 4 305 994
- DE-B- 1 113 336
- DE-U- 29 509 566
- FR-A- 1 330 792
- FR-A- 1 378 647
- US-A- 5 188 477

## Beschreibung

Die Neuerung bezieht sich auf ein Axialkugelgelenk für Gestänge in Kraftfahrzeugen nach dem Oberbegriff des Schutzanspruches 1.

Axialkugelgelenke mit diesen Ausbildungsmerkmalen werden in sehr großen Stückzahlen in Kraftfahrzeugen verwendet. Sie sind einem natürlichen Verschleiß sowie einer natürlichen Alterung unterworfen und arbeiten häufig unter unterschiedlichen Temperatur- und Wetterbedingungen. Daraus ergeben sich unerwünschte Gelenkspiele. Ein gattungsgemäßes Axialkugelgelenk geht beispielsweise aus der US 5,188,477 hervor. In der genannten Schrift ist ein Axialkugelgelenk offenbart, das eine Lagerschale aufweist, die an ihrer äußeren, konischen Oberfläche mit Rippen ausgestattet ist. Diese Rippe bilden eine Kontaktfläche zu einem in das Gehäuse eingelegten Ring. Durch eine unmittelbare Abstützung der Lagerschale im Bodenbereich des Gehäuses, wird infolge axialer Belastung die Lagerschale verstärkt abgenutzt, sodaß sich ein zunehmendes axiales Spiel der Gelenkbauteile einstellt. Ein weiterer Nachteil der bekannten Ausführungsform besteht in ihrer Temperaturabhängigkeit. In derartigen Axialgelenken sind auch in Abhängigkeit von der Einbaulage Temperaturen über 100° Celsius nicht ungewöhnlich. Durch die damit verbundene Ausdehnung der einzelnen Bauteile sowie die Veränderung der Materialeigenschaften herkömmlicher Werkstoffe tritt innerhalb des Axialgelenkes eine sehr große Reibung auf, sodaß das Gelenk insgesamt schwergängig wird und sich verstärkt abnutzt, das heißt einen erhöhten Verschleiß aufweist.

Der Erfindung liegt die Aufgabe zugrunde, die Spielraumbildung durch konstruktive Gelenkgestaltung zu vermeiden.

Erreicht wird dies gemäß der Erfindung durch Ausbildungsmerkmale nach dem Kennzeichnungsteil der Schutzanspruches 1. Ein Axialkugelgelenk mit diesen Ausbildungsmerkmalen wird mit geringer Vorspannung beim Schließen des Gehäuses durch Materialverformung des offenen Gehäuserandes montiert. Die Schrägflächen an der Lagerschale und im Gehäuse schließen trozt der Verwendung eines separater Puffers vorteilhaft mit der Längsachse des Axialgelenks einen Winkel von etwa 45° ein. Durch die Vorspannung werden Wärmebewegungen (Dehnungen und Schrumpfungen) der Bauteile des Axialkugelgelenks kompensiert. Die gleichen Ausbildungsmerkmale kompensieren aber auch Lagerabmessungen infolge eines natürlichen Verschleißes oder einer natürlichen Alterung. Der zwischen der Lagerschale und dem Gehäuse eingefügte Puffer besteht vorzugsweise aus einem Gummiring ausgewählter elastischer Materialsteifigkeit. Durch geeignete Materialauswahl läßt sich eine hohe Temperaturbeständigkeit und eine geringe Druckverformung des Gummiringes ohne weiteres erreichen. Vorzugsweise sollte eine Temperaturbeständigkeit der Gummimischung bis etwa 140° Celsius reichen. Die Lagerschale erhält durch die Ausbildungsmerkmale nach der Neuerung die Möglichkeit, sich bei Temperaturunterschieden frei und ohne Vorspannung auszudehnen. Es entsteht kein freies Lagerspiel infolge der selbsttätigen Nachstellung bei natürlichem Verschleiß oder natürlicher Alterung. Die Lebensdauer eines Axialkugelgelenks mit den neuen Ausbildungsmerkmalen wird erhöht.

Vorzugsweise gehen die radiale Stützfläche und ein zylindrischer Innenwandbereich an der Innenseite des Gehäuses mit einer Kehlung ineinander über, wobei diese Kehlung den Gummiring aufnimmt, der den elastischen Puffer bildet. Diese Kehlung an der Innenseite des Gehäuses und die Schrägfläche an der Außenseite der Lagerschale schließen einen Hohlraum ein, in dem der Gummiring angeordnet ist. Erreicht wird auf diese Weise eine Verbesserung der selbsttätigen Nachstelleigenschaften des Axialkugelgelenks. Vorzugsweise sollten definierte Anschlage vorgesehen sein, um keine Schädigung der Nachstellelemente eintreten zu lassen.

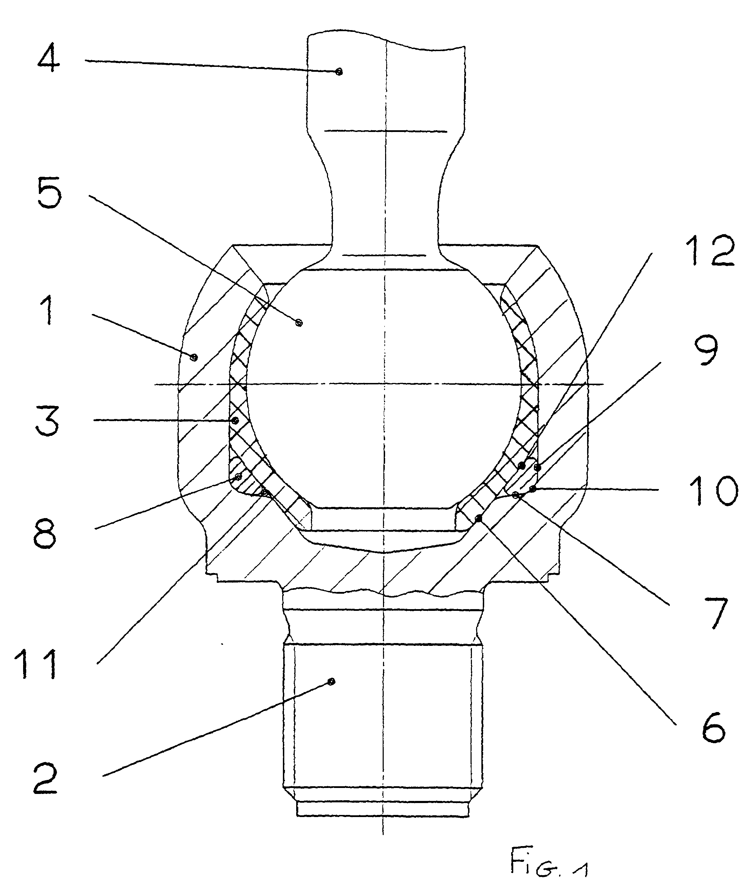

In der Zeichnung ist ein Ausführungsbeispiel der Erfindung in einem Schnitt in einer Achsebene dargestellt.

Das Axialkugelgelenk besteht aus dem einseitig offenen, metallischen Gehäuse 1 mit einem an der offenen Gehäuseseite gegenüberliegend angeformten Befestigungszapfen 2 und einem darin in einer Lagerschale 3 aus Kunststoff gelagerten, am Ende eines aus der offenen Seite des Gehäuses 1 koaxial zu dem Befestigungszapfen 2 herausragenden Kugelzapfens 4 ausgebildeten, ebenfalls metallischen Gelenkkugel 5. Letztere wird in dem Gehäuse 1 durch einwärts gebogene Verformung des offenen Gehäuserandes gehalten. Innerhalb des Gehäuses 1 stützt sich die Lagerschale 3 an der Seite des Befestigungszapfens 2 mit einer Schrägfläche 12 gegen eine korrespondierende Schrägfläche 6 an der Innenseite des Gehäuses 1 ab. Zwischen der Lagerschale 3 und einer etwa radial verlaufenden Stützfläche 7 an der Innenseite des Gehäuses 1 ist ein elastischer Puffer aus einem Werkstoff mit ausgewählter elastischer Kennung angeordnet. Im Beispiel besteht dieser elastische Puffer aus einem Gummiring 8 ausgewählter elastischer Materialsteifigkeit. Die radiale Stützfläche 7 und ein zylindrischer Innenwandbereich 9 gehen mit einer Kehlung 10 ineinander über, wobei der Gummiring 8 sich einerseits in dieser Kehlung und andererseits gegen die Schrägfläche 12 an der Lagerschale 3 abstützt. Die Schrägfläche 12 an der Lagerschale 3 und die Kehlung 10 an der Innenseite des Gehäuses bilden einen Hohlraum 11, in dem der Gummiring 8 angeordnet ist.

## Patentansprüche

1. Axialkugelgelenk für Gestänge in Kraftfahrzeugen, bestehend aus einem einseitig offenen, metallischen Gehäuse (1), welches einer offenen Gehäuseseite gegenüberliegend einen Befestigungszapfen (2) aufweist, einer in dem Gehäuse (1) in einer Lagerschale (3) aus Kunststoff gelagerten, am Ende eines aus der offenen Gehäuseseite koaxial zu dem Befestigungszapfen herausragenden Kugelzapfens (4) befindlichen, ebenfalls metallischen Gelenkkugel (5), die durch Materialverformung des offenen Gehäuserandes in dem Gehäuse (1) gehalten ist, wobei eine radiale Stützfläche (7) und ein zylindrischer Innenwandbereich (9) des Gehäuses (1) mit einer Kehlung (10) ineinander übergehen, somit einen Hohlraum (11) bilden und ein Puffer (8) in diesem Hohlraum (11) angeordnet ist, wobei sich die Lagerschale (3) ist einer Schrägfläche (12) gegen den in dem Hohlraum (11) zwischen der Lagerschale (3) und dem Gehäuse (1) angeordneten elastischen Puffer (8) abstützt, **dadurch gekennzeichnet, daß** sich die Lagerschale (3) an der befestigungszapfenseitigen Gehäuseseite mit der Schrägfläche (12) auch gegen eine Schrägfläche (6) am Gehäuse abstütz und die Schrägfläche (12) an der Lagerschale und die Schrägfläche (6) im Gehäuse mit der Längsachse des Axialkugelgelenks einen Winkel von etwa 45° einschließen.

2. Axialkugelgelenk nach Anspruch 1, **dadurch gekennzeichnet, daß** der elastische Puffer (8) ein Gummiring ausgewählter elastischer Materialsteifigkeit ist.

3. Axialkugelgelenk nach Anspruch 2, **dadurch gekennzeichnet, daß** der Puffer (8) aus einer Gummimischung besteht, deren Temperaturbeständigkeit bis etwa 140° Celsius beträgt.

## Claims

1. Axial ball joint for linkages in motor vehicles, comprising a metal housing (1), which is open at one end and comprises a fastening pin (2) opposite an open housing end, a likewise metal joint ball (5), which is supported in the housing (1) in a bearing shell (3) made of plastics material, is situated on the end of a ball pivot (4) projecting coaxially with the fastening pin from the open housing end and is held in the housing (1) through material forming of the open housing edge, wherein a radial supporting surface (7) and a cylindrical inner wall region (9) of the housing (1) with a fluting (10) verge one into the other and hence form a cavity (11) and a buffer (8) is disposed in said cavity (11), wherein the bearing shell (3) is supported via an oblique surface (12) against the elastic buffer (8) disposed in the cavity (11) between the bearing shell (3) and the housing (1), **characterized in that** the bearing shell (3) at the fastening-pin housing end is supported via the oblique surface (12) also against an oblique surface (6) of the housing and the oblique surface (12) of the bearing shell and the oblique surface (6) in the housing form an angle of approximately 45° with the longitudinal axis of the axial ball joint.

2. Axial ball joint according to claim 1, **characterized in that** the elastic buffer (8) is a rubber ring of a selected elastic material stiffness.

3. Axial ball joint according to claim 2, **characterized in that** the buffer (8) is made of a rubber mixture, which is heat-stable up to approximately 140° Celsius.

## Revendications

1. Articulation axiale à rotule pour tringlerie de véhicules automobiles, constituée d'un boîtier (1) métallique, ouvert d'un côté, qui comporte un tenon de fixation (2) opposé à un côté ouvert du boîtier, d'une rotule d'articulation (5) également métallique, montée dans le boîtier (1), dans une coquille de coussinet (3) en matière plastique, et se trouvant à l'extrémité d'un pivot à rotule (4) ressortant du côté ouvert du boîtier, coaxialement au tenon de fixation, laquelle rotule d'articulation est maintenue par déformation de matière du bord ouvert du boîtier dans le boîtier (1), une surface d'appui radiale (7) et une zone de paroi intérieure (9) cylindrique du boîtier (1) se prolongeant l'une l'autre par une gorge (10), de manière à former une cavité (11), et un tampon (8) étant disposé dans cette cavité (11), la coquille de coussinet (3) prenant appui, par une surface oblique (12), contre le tampon élastique (8), disposé dans la cavité (11) entre la coquille de coussinet (3) et le boîtier (1), **caractérisée en ce que** la coquille de coussinet (3) prend appui, sur le côté du boîtier situé du côté du tenon de fixation, par la surface oblique (12), également contre une surface oblique (6) du boîtier, et la surface oblique (12) de la coquille de coussinet ainsi que la surface oblique (6) dans le boîtier forment un angle d'environ 45° avec l'axe longitudinal de l'articulation axiale à rotule.

2. Articulation axiale à rotule selon la revendication 1, **caractérisée en ce que** le tampon élastique (8) est une bague en caoutchouc à rigidité de matière élastique choisie.

3. Articulation axiale à rotule selon la revendication 2, **caractérisée en ce que** le tampon (8) est réalisé dans un mélange de caoutchouc dont la résistance à la température est d'environ 140 ° Celsius.
